# EUROPÄISCHE PATENTSCHRIFT

(11) **EP 1 350 427 B1**
(45) Veröffentlichungstag und Bekanntmachung des Hinweises auf die Patenterteilung: **14.02.2007**
(21) Anmeldenummer: 02008931.4
(22) Anmeldetag: 22.04.2002
(51) Int. Cl.: A01G 1/02, A01G 13/02

(54) **Abdeckung für einen Spargeldamm**
Cover for asparagus bed
Recouvrement pour un billon d'asperges

(30) Priorität: 05.04.2002 EP 02007709
(43) Veröffentlichungstag der Anmeldung: 08.10.2003
(73) Patentinhaber: Böckenhoff, Bernhard, 46348 Raesfeld-Erle (DE)
(72) Erfinder: Böckenhoff, Bernhard, 46348 Raesfeld-Erle (DE)
(74) Vertreter: Gesthuysen, von Rohr & Eggert

(56) Entgegenhaltungen:
- EP-A- 1 097 631
- EP-A- 1 101 400
- WO-A-00/62597
- WO-A-98/30082
- DE-A- 19 911 765

## Beschreibung

Die Erfindung betrifft eine Abdeckung für einen Spargeldamm nach dem Oberbegriff des Anspruchs 1 sowie ein Verfahren zum Befüllen von Taschen einer Abdeckung für einen Spargeldamm mit Beschwerungsgut nach dem Oberbegriff des Anspruchs 9.

Eine Abdeckung der eingangs genannten Art ist bereits aus der Praxis bekannt. Die bekannte Abdeckung weist Taschen auf, die durch Längs- und Querverschweißungen in Form eines "T" gebildet sind. Während die Querverschweißungen die Taschenlänge bestimmen, befindet sich zwischen benachbarten Längsverschweißungen eine Einfüllöffnung, deren Länge im Vergleich zur Taschenlänge klein ist. Nachteilig bei der bekannten Abdeckung ist, daß das Einfüllen von Beschwerungsgut manuell zu erfolgen hat und vergleichsweise arbeitsaufwendig ist. Hierzu ist es nämlich erforderlich, das Beschwerungsgut mittels einer kleinen Schaufel o. dgl. in die recht kleine Einfüllöffnung einzubringen und dieses dann innerhalb der Tasche auch in den Bereichen, in denen sich Längs-Verbindungen befinden, zu verteilen.

Aus der EP-A-1 097 631 ist eine Abdeckfolie für Spargelfelder zur Auflage auf die Dämme der Spargelbeete bekannt, die aus einer Kunststoffolie besteht, bei denen längsseitig die beiden Enden der Folie nach oben gefaltet und zum Teil durch Schweißnähte fixiert werden, wodurch Taschen zur Aufnahme von Erde oder Sand gebildet werden. Die aus der EP-A- 1 097 631 bekannte Abdeckfolie zeichnet sich dadurch aus, daß die Schweißnähte vom unteren Teil der Umschlagsbreite nahezu senkrecht und im oberen Teil dazu im Winkel von 100 bis 150° zu dieser Senkrechten nach oben gehen, so daß Taschen mit einem Querschnitt in Form eines zweimal gleichschenkligen Sechsecks entstehen, bei dem die zwei Schenkelpaare durch Schweißnähte und die breitere untere Seite durch die Faltung der Folie verschlossen sind, während die schmalere obere Seite offen für die Aufnahme von Erde oder Sand bleibt.

Es ist vom Anmelder bereits versucht worden, das relativ aufwendige Befüllen der Taschen mit Beschwerungsgut dadurch zu vereinfachen, die Taschen lediglich zwischen Querverbindungen auszubilden oder aber die Längsverbindungen oberhalb der Querverbindungen sehr kurz auszuführen, so daß sich recht große Einfüllöffnungen ergeben. Auf diese Weise erstreckt sich die Einwurföffnung zwar über einen großen Teil der Tasche, was das Einfüllen erleichtert, jedoch fällt das Beschwerungsgut ebenso leicht wieder aus der Tasche, wenn die Abdeckung in diesem Bereich angehoben wird, um an den Spargeldamm zu gelangen und Spargel zu ernten. Um nicht nach jedem Anheben der Abdeckung erneut die Taschen mit Beschwerungsgut befüllen zu müssen, hat man daher den Nachteil des aufwendigen Befüllens bei der eingangs genannten Folie in Kauf genommen.

Aufgabe der vorliegenden Erfindung ist es nun, eine Abdeckung der eingangs genannten Art zur Verfügung zu stellen, bei der es in einfacher Weise möglich ist, die Taschen mit Beschwerungsgut zu füllen, während das Beschwerungsgut dennoch in den Taschen verbleibt, wenn die Abdeckung angehoben wird.

Die vorgenannte Aufgabe ist bei einer Abdeckung der eingangs genannten Art durch die kennzeichnenden Merkmale des Anspruchs 1 gelöst. Durch die erfindungsgemäße Ausgestaltung wird ein oberer Taschenbereich als Einwurftasche zur Verfügung gestellt, wobei die der eigentlichen Tasche vorgesetzte Einwurftasche eine Einwurföffnung mit möglichst maximalem Öffnungsquerschnitt haben soll, so daß in diese Tasche leicht das Beschwerungsgut eingefüllt werden kann, wobei aber gleichzeitig beachtet werden sollte, daß die die Einwurftasche begrenzenden Querverbindungen möglichst dauerhaft halten. Die Verwendung großer Einwurföffnungen bietet sogar die Möglichkeit, die Befüllung des oberen Taschenbereichs mit Beschwerungsgut automatisch vorzunehmen. So kann beispielsweise ein Schar seitlich an der Folienbahn entlang geführt werden und Beschwerungsgut aufwerfen, das dann gegen die Seitenflächen der Abdeckung fällt, so daß das Beschwerungsgut anschließend über die großen Einwurföffnungen in den oberen Taschenbereich bzw. die Einwurftaschen rutscht. Von den Einwurftaschen abgetrennt ist der untere Taschenbereich mit den eigentlichen Taschen, wobei die Einwurftaschen von den eigentlichen Aufnahmetaschen über die Längsverbindungen getrennt sind.

Es darf in diesem Zusammenhang angemerkt werden, daß mit "Längsverbindungen" sowohl sich über eine längere Strecke erstreckende Längsverbindungen als auch punktförmige Verbindungen gemeint sind, die sich in Längsrichtung der Abdeckung erstrecken. Aufgrund dieser Längsverbindungen zwischen dem oberen und dem unteren Taschenbereich fällt das zunächst in den Einwurftaschen befindliche Beschwerungsgut nicht unmittelbar in die unteren Taschen. Hierzu ist es beispielsweise erforderlich, die Abdeckung in diesem Bereich kurz anzuheben und zu rütteln, damit das Beschwerungsgut in die unteren Taschen gelangt. Grundsätzlich ist es aber auch möglich, die Abdekkung mit dem in den Einwurftaschen befindlichen Beschwerungsgut zunächst in diesem Zustand zu belassen und das Beschwerungsgut mittels Wasser in die unteren Taschen einzuspülen. Dies kann unmittelbar nach dem Befüllen der Einwurftaschen durch Zuführen von Wasser geschehen. Bei einer sehr einfachen und bevorzugten Alternative wird aber lediglich der nächst Regenschauer abgewartet, wodurch das sich im Bereich der Abdeckung sammelnde Regenwasser das Beschwerungsgut aus den oberen Einwurftaschen in die unteren Taschen spült.

Grundsätzlich ist es möglich, für die Taschen und die Einwurftaschen jeweils eigene Querverbindungen vorzusehen, die dann versetzt zueinander sind. Aus herstellungstechnischen Gründen ist es aber bevorzugt, daß die Taschen und die Einwurftaschen gemeinsame, in einem durchgehende Querverbindungen aufweisen. Hierdurch ist dann jeder Tasche zumindest eine Einwurftasche zugeordnet.

Um einerseits eine Einwurftasche mit einem maximalen Öffnungsquerschnitt zu haben und andererseits ein Aufreißen der Querverbindungen möglichst zu verhindern, sind erfindungsgemäß verschiedene Möglichkeiten vorgesehen, die jeweils für sich oder aber auch in beliebiger Kombination miteinander zum Einsatz kommen können. So ist es entweder möglich, oberhalb der Querverbindung entweder keine Längsverbindung oder aber eine Längsverbindung geringer Länge vorzusehen. Des weiteren kann oberhalb der Querverbindung wenigstens eine punktförmige Verbindung vorgesehen sein, die sich aber auch in Quer- und/oder Längsrichtung erstrecken kann. Außerdem ist es möglich, daß die Querverbindung eine Mehrzahl einzelner aufeinanderfolgender Querverbindungsabschnitte aufweist, die jeweils von einem nicht verbundenen Abschnitt unterbrochen sind. Darüber hinaus kann die Querverbindung eine größere Breite als die Längsverbindung aufweisen oder aber es können als Querverbindung eine Mehrzahl von querverlaufenden Verbindungen vorgesehen sein. Sämtliche der vorgenannten Ausgestaltungen haben letztlich den Vorteil, daß sich eine Verstärkung der Querverbindung oder jedenfalls ein Schutz für die Querverbindung gegen Einreißen ergibt.

Um das Einfüllen der oberen Einwurftaschen zu vereinfachen und gleichzeitig das in die unteren Taschen abgerutschte Beschwerungsgut auch beim Aufklappen der Abdeckung in den Taschen zu halten, ist die Öffnungsweite der Einwurföffnung größer als die Öffnungsweite der Öffnung. Besonders bietet es sich in diesem Zusammenhang natürlich an, daß die Öffnungsweite der Einwurföffnung dem Abstand benachbarter Querverbindungen entspricht. Dies bedeutet mit anderen Worten, daß im Bereich der Einwurföffnung keine Längsverbindungen vorgesehen sind, so daß die oberen Einwurftaschen über ihre gesamte Länge geöffnet sind, was insbesondere das automatische Einfüllen erheblich vereinfacht. Demgegenüber sollte die Öffnungsweite der Öffnung der unteren Tasche um den Faktor 2 bis 20 kleiner sein als die Öffnungsweite der Einwurföffnung. Eine derartige Größe der Öffnung stellt zum einen sicher, daß das Beschwerungsgut noch leicht in die unteren Taschen eingebracht bzw. eingespült werden kann, dieses jedoch sicher in der Tasche beim Aufklappen der Abdeckung verbleibt.

Damit das Einspülen von Beschwerungsgut aus den oberen Einwurftaschen in die unteren Taschen gut erfolgen kann, sollte die Einwurföffnung mittig zwischen den Querverbindungen vorgesehen sein, so daß das Beschwerungsgut von beiden Seiten her über die Öffnung in die jeweilige Tasche gespült werden kann. Zweckmäßigerweise sollte in diesem Zusammenhang einer oberen Einwurftasche auch nur eine untere Tasche mit nur einer Öffnung zugeordnet sein. Dies bietet sich auch aus herstellungstechnischen Gründen an. Gerade wenn nur eine Öffnung zwischen einer oberen und einer unteren Tasche vorgesehen ist, sollte diese Öffnung zwischen zwei Längsverbindungen gebildet sein. Dies bietet sich auch aus herstellungstechnischen Gründen an. Die Längsverbindungen sollten dabei bis an die Querverbindungen geführt sein und kurz vor diesen in einem geringen Abstand (0,1 cm bis 3,0 cm) enden.

Von besonderen Vorteil ist es, wenn die Längsverbindungen in Richtung auf die Öffnung geneigt sind. Dies erleichtert erheblich das Einspülen von Beschwerungsgut aus den oberen Einwurftaschen in die unteren weiteren Taschen.

Da die oberen Einwurftaschen das zunächst in diesen aufgenommene Beschwerungsgut an die unteren Taschen weitergeben, ist es erforderlich, daß die Einwurftaschen und die unteren Aufnahmetaschen in einem bestimmten Verhältnis zueinander stehen. Die Wahl der einzelnen Taschen sollte dabei so sein, daß die Grundfläche der Einwurftaschen jedem Wert zwischen dem 0,5-bis 2-fachen der Grundfläche der unteren Taschen entsprechen kann, wobei die Grundflächen der einzelnen Taschen einander vorzugsweise etwa entsprechen. Im Idealfall kann dann das gesamte in einer Einwurftasche befindliche Beschwerungsgut in die untere Tasche eingespült werden.

Zur weiteren Vereinfachung insbesondere des automatischen Befüllens der Taschen ist vorgesehen, daß die Querverbindungen der Einwurftaschen nicht bis zum äußeren freien Folienrand des umgefalteten Teils reichen, so daß sich ein in Längsrichtung verlaufender freier Randbereich oberhalb der Querverbindungen und der einzelnen Taschen ergibt. Dieser freie Randbereich sollte vom nicht umgefalteten Bereich abstehen, was das Öffnen der Einwurftaschen zum Einfüllen von Beschwerungsgut erheblich vereinfacht. Des weiteren sollten die Querverbindungen auch nicht bis zum unteren Umfaltrand der Abdeckung reichen - es sollte also ein geringer Abstand zwischen dem unteren Ende der Querverbindungen und dem Umfaltrand verbleiben. Auf diese Weise ergibt sich dann ein Freiraum, der es erleichtert, die Abdeckung nach ihrem Gebrauch aufzuwickeln.

Wie zuvor ausgeführt worden ist, betrifft die vorliegende Erfindung nicht nur eine Abdeckung der vorgenannten Art, sondern auch das Verfahren zum Befüllen der Taschen mit Beschwerungsgut. Die Erfindung ermöglicht es, daß das Beschwerungsgut mittels einer entlang des Spargeldamms verfahrbaren Einrichtung automatisch gegen die Abdeckung im Bereich der Seitenflächen derart geworfen wird, daß es anschließend in die Einwurftaschen rutscht. Das Aufwerfen des Beschwerungsguts kann dabei beispielsweise über ein Schar erfolgen. Vor dem Aufwerfen des Beschwerungsgutes sollten die oberen Einwurftaschen automatisch, insbesondere durch Einblasen von Druckluft, geöffnet werden. Das Einbringen des Beschwerungsgutes in die unteren Taschen sollte durch Einspülen geschehen, insbesondere durch Einspülen von Regenwasser.

Die Erfindung wird nachfolgend anhand der Zeichnung näher beschrieben. Dabei zeigt
- Fig. 1: eine Querschnittsansicht eines Spargeldamms mit aufgelegter Abdeckung,
- Fig. 2: eine Draufsicht auf einen Teil einer erfindungsgemäßen Abdekkung und
- Fig. 3 bis 7: Draufsichten auf Teile weiterer Ausführungsformen von erfindungsgemäßen Abdeckungen.

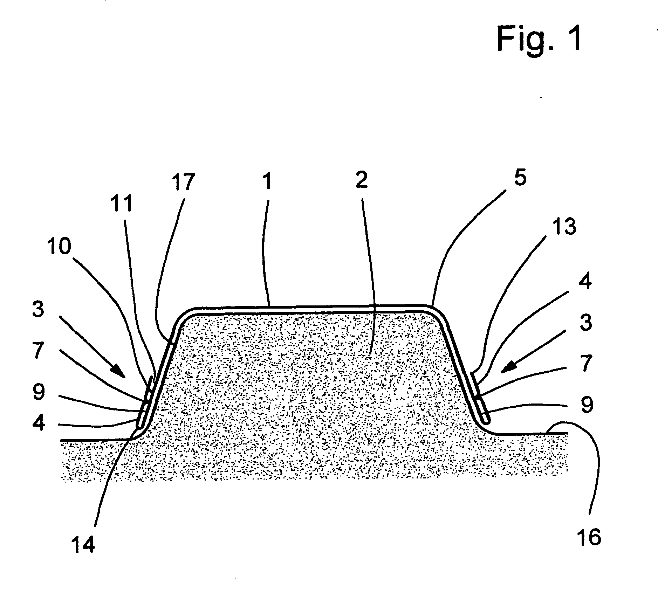

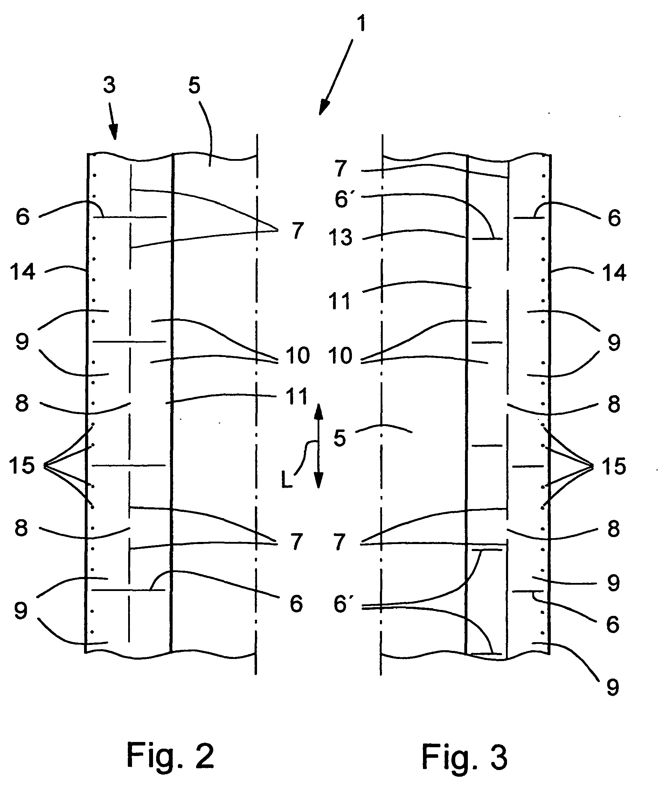

In den Figuren ist jeweils eine Abdeckung 1 für einen Spargeldamm 2 dargestellt, wobei die Abdeckung 1 im in Fig. 1 dargestellten Zustand auf den Spargeldamm 2 aufgelegt ist, während die in den Fig. 2 und 3 dargestellten Abdeckungen 1 lediglich auf dem Boden ausgerollt sind. Die Abdeckung 1 weist eine langgestreckte Folienbahn auf, deren beide Längsränder 3 auf sich selbst umgefaltet sind. Der umgefaltete Teil 4 der Folienbahn ist mit dem nicht umgefalteten Teil 5 oder Hauptteil der Folienbahn durch Querverbindungen 6 und Längsverbindungen 7 unter Bildung einer Vielzahl von in Längsrichtung L hintereinander in Reihe angeordneten, jeweils eine Öffnung 8 aufweisenden Taschen 9 verbunden. Die Taschen 9 sind im wesentlichen identisch ausgebildet, haben also die gleiche Länge und Breite, und dienen zur Aufnahme von Beschwerungsgut. Bei dem Beschwerungsgut handelt es sich vorliegend um Bodenmaterial, nämlich Erde, Sand o. dgl. Bei den einzelnen Querverbindungen 6 und Längsverbindungen 7 kann es sich grundsätzlich um Klebverbindungen handeln. Bevorzugt handelt es sich dabei aber um Schweißverbindungen. Dabei verlaufen die Querverbindungen 6 im rechten Winkel zur Längsrichtung L der Abdeckung 1, während die Längsverbindungen 7 parallel dazu verlaufen.

Die Folienbahn selbst besteht aus einem Kunststoffmaterial, das auf seinen beiden Seiten unterschiedliche Farben aufweist. Bevorzugt ist die eine Seite schwarz, die andere Seite weiß. Die Folienbahn hat üblicherweise eine Breite von ca. 1,0 bis 1,6 m und eine Länge- je nach Länge des Spargeldamms - von mehr als 100 m.

Vorgesehen ist nun, daß der Reihe von Taschen 9 quer zur Längsrichtung L eine Reihe mit einer Vielzahl von Längsrichtung L hintereinander angeordneten Einwurftaschen 10 vorgesetzt ist. Die einzelnen Einwurftaschen 10, die einander entsprechen, werden dabei ebenfalls vom umgefalteten Längsrand 3 gebildet, wobei der jeweilige Längsrand 3 im Bereich der Einwurftaschen 10 eine Vielzahl von Querverbindungen 6, 6' aufweist, wobei jede Einwurftasche 10 zwischen benachbarten Querverbindungen 6, 6' gebildet ist. Des weiteren weist jede Einwurftasche 10 eine Einwurföffnung 11 auf, über die Beschwerungsmaterial eingeführt werden kann. Die Einwurftaschen 10 selbst münden über die Öffnungen 8 in die Taschen 9. Des weiteren ist es bei den einzelnen Einwurftaschen 10 so, daß die Einwurföffnungen 11 eine Öffnungsweite von mindestens 80 % des Abstands benachbarter Querverbindungen 6, 6' aufweisen, so daß sich eine möglichst große Öffnungsweite der einzelnen Einwurföffnungen 11 ergibt.

Bei der in Fig. 2 dargestellten Ausfiihrungsform weisen die Taschen 9 und die Einwurftaschen 10 gemeinsame bzw. durchgehende Querverbindungen 6 auf, während dies bei der Ausfiihrungsform gemäß Fig. 3 nicht der Fall ist. Die Querverbindungen 6 verlaufen dabei versetzt zu den Querverbindungen 6' der Einwurftaschen 10.

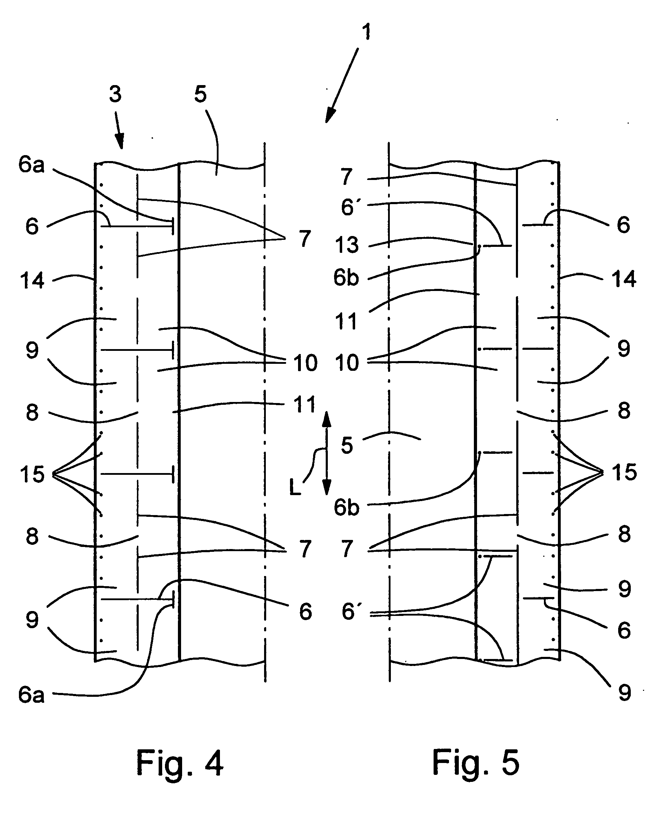

Bei den beiden Ausführungsformen gemäß den Fig. 2 und 3 ist es jeweils so, daß die Öffnungsweite der Einwurföffnungen 11 der Breite der einzelnen Einwurftaschen 10 entspricht. Die Einwurftaschen 10 sind also über ihre gesamte Länge nach oben hin offen. Bei der Ausführungsform gemäß Fig. 4 ist es so, daß kurze Längsverbindungsabschnitte 6a oberhalb der jeweiligen Querverbindung 6, 6' vorgesehen sind. Die Querverbindungen 6, 6' können unmittelbar in die Längsverbindungsabschnitte 6a übergehen, oder aber auch einen geringen Abstand (1 bis 3 cm) von diesem haben. Bei der in Fig. 5 dargestellten Ausführungsform ist oberhalb der Querverbindung 6' eine punktförmige Verbindung 6b vorgesehen. Diese punktförmige Verbindung 6b hat einen geringen Abstand von der Querverbindung 6'. Grundsätzlich ist es auch möglich, daß eine Mehrzahl von punktförmigen Verbindungen vorgesehen ist, die sich sowohl in Querrichtung als auch in Längsrichtung erstrecken. So können die punktförmigen Verbindungen beispielsweise die Längsverbindungsabschnitte 6a ersetzen.

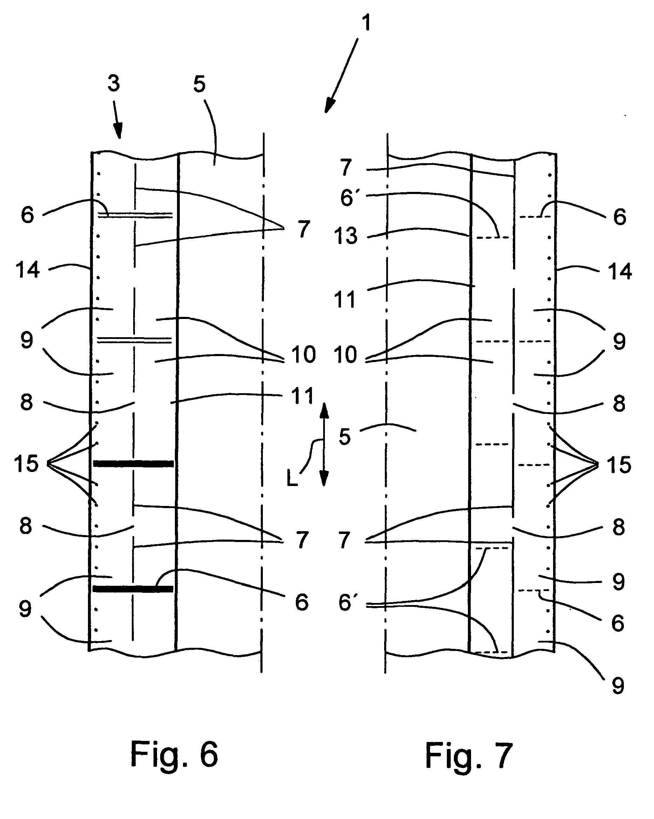

In Fig. 6 sind zwei unterschiedliche Möglichkeiten der Verstärkung der Querverbindungen 6 dargestellt. Im unteren Teil der Ausführungsform gemäß Fig. 6 sind die Querverbindungen 6 dadurch verstärkt, daß sie eine größere Breite als die Längsverbindungen haben. Im oberen Teil der Fig. 6 setzen sich die Querverbindungen 6 aus einer Mehrzahl von querverlaufenden Verbindungen - vorliegend zwei - zusammen. Die querverlaufenden Verbindungen können, wie dargestellt im rechten Winkel zur Längsrichtung und parallel zueinander verlaufen. Sie können aber auch V-förmig oder in Art eines umgestülpten V angeordnet sein. Bei der in Fig. 7 dargestellten Ausführungsform sind die Querverbindungen 6, 6' durch eine Mehrzahl von aufeinanderfolgenden Querverbindungsabschnitten gebildet, zwischen denen sich jeweils verbindungsfreie Bereiche befinden.

Nicht dargestellt ist, daß zur Abtrennung der Taschen 9 von den Einwurftaschen 10 statt der dargestellten Längsverbindungen auch punktförmige Verbindungen vorgesehen sein können, die sich in Längsrichtung L der Abdekkung 1 erstrecken. Bei den punktförmigen Verbindungen handelt es sich dann - wie auch bei den Längsverbindungen - vorzugsweise um Schweißverbindungen.

Wie sich aus den Fig. 2 und 3 ergibt, ist die Öffnungsweite der einzelnen Einwurföffnungen 11 größer als die Öffnungsweite der unteren Öffnungen 8. In den dargestellten Ausführungsbeispielen entspricht die Öffnungsweite jeder Einwurföffnung 11 der jeweiligen Taschenlänge. Die Einwurföffnung 11 erstreckt sich also zwischen den benachbarten Querverbindungen 6, ohne daß Längsverbindungen in diesem Bereich vorgesehen sind. Vorliegend liegt die Öffnungsweite der Einwurföffnung 11 zwischen 30 cm und 1,50 m, während die Öffnungsweite der unteren Öffnung 8 zwischen 5 cm und 30 cm liegt.

Bei der in Fig. 2 dargestellten Ausführungsform befindet sich die Einwurföffnung 11 mittig zwischen zwei Querverbindungen 6, wobei der Einwurftasche 10 nur eine einzige untere Tasche 9 mit nur einer Öffnung 8 zugeordnet ist. Bei der in Fig. 3 dargestellten Ausführungsform sind die Taschen 9 und die Einwurftaschen 10 versetzt zueinander angeordnet. Hierdurch können einer Tasche 9 auch zwei Einwurftaschen 10 oder umgekehrt zugeordnet sein. Bei allen Ausführungsformen ist es so, daß die Querverbindungen 6 bzw. 6' und die Längsverbindungen 10 sich nicht kreuzen. Bei der Ausfiihrungsform gemäß Fig. 2 sind die Querverbindungen 6 durchgehend, während die Längsverbindungen 7 kurz vor den Querverbindungen 6 enden. Bei der Ausführungsform gemäß Fig. 3 enden die Querverbindungen 6, 6' kurz vor den Längsverbindungen 7. Hierdurch wird sichergestellt, daß sich keine Sollbruchstellen bzw. Schwachstellen an der Folie ergeben, da festgestellt worden ist, daß bei sich kreuzenden Verbindungen potentielle Schwachstellen an der Folienbahn ergeben.

Nicht dargestellt ist im übrigen, daß die Längsverbindungen 7 auch in Richtung der Öffnung 8 geneigt ausgebildet sein können, was das Einspülen von Beschwerungsgut in die Taschen 9 erleichtert.

Wie sich im übrigen aus den Fig. 2 und 3 ergibt, entspricht die Grundfläche der Tasche 9 etwa der Grundfläche der Einwurftasche 10. Trotz dieser im wesentlichen gleichen Flächen haben die Taschen 9 und die zugehörigen Einwurftaschen 10 nicht die gleichen Volumina. Dadurch, daß die Einwurftaschen 10 nach oben hin vollständig geöffnet sind, kann in diesen Taschen 10 ein größeres Volumen an Beschwerungsgut aufgenommen werden als dies bei den Taschen 9 der Fall ist. Durch diese Ausbildung kann jedoch sichergestellt werden, daß eine hinreichend große Menge an Beschwerungsgut aus den Einwurftaschen 10 in die Taschen 9 gespült werden kann.

Wie sich im übrigen aus den Fig. 2 und 3 ergibt, reichen die Querverbindungen 6 der Taschen 10 nicht bis zum äußeren freien Folienrand 12 des umgefalteten Teils. Hierdurch ergibt sich ein in Längsrichtung L verlaufender freier Randbereich 13 oberhalb der Querverbindungen 6, der damit den Einwurftaschen 10 in Richtung zur Mittellängsachse der Abdeckung 1 vorgesetzt ist. Der freie Randbereich 13 sollte dabei derart ausgebildet sein, daß er vom nicht umgefalteten Bereich 4 auch im nicht gefüllten Zustand der Taschen 9, 10 absteht.

Im übrigen ergibt sich aus den Fig. 1 und 2, daß die Querverbindungen 6, 6' nicht bis zum äußeren Umfaltrand 14 reichen. Zwischen den Querverbindungen 6, 6' und dem Umfaltrand 14 verbleibt also ein geringer Abstand, so daß Luft oder auch Wasser von einer unteren Tasche 9 in eine benachbarte Tasche 9 fließen kann.

Im übrigen ist bei den dargestellten Ausführungsformen vorgesehen, daß in den Taschen 9 jeweils wenigstens eine Öffnung 15 geringen Durchmessers vorgesehen ist, so daß hierüber Wasser ablaufen oder aber eine Entlüftung stattfinden kann.

Das Auslegen einer erfindungsgemäßen Abdeckung 1 und das anschließende Befüllen der Taschen 9, 10 läuft nun derart ab, daß die im angelieferten Zustand zunächst aufgewickelte Abdeckung 1 zunächst auf dem Spargeldamm 2 abgerollt wird. Nach korrekter Ausrichtung der Abdeckung 1 auf dem Spargeldamm werden zunächst die Einwurftaschen 10 zum Beispiel durch Einblasen von Luft geöffnet. Anschließend wird ein Schar entlang des Spargeldammes 2 bzw. der Abdeckung 1 im Bereich der Dammfurchen 16 verfahren. Dabei wird Beschwerungsgut gegen die Abdeckung 1 im Bereich der Seitenflächen 17 des Spargeldamms 2 geworfen. Das Beschwerungsgut rutscht dann auf der Abdeckung 1 ab und fällt in die geöffneten Einwurftaschen 10.

Das Öffnen der Taschen 10 und das Befüllen durch Aufwerfen von Beschwerungsgut kann mit einer Vorrichtung durchgeführt werden, die zunächst Druckluft in die Taschen 10 einbläst und gleichzeitig den Schar führt. Des weiteren kann an dieser Einrichtung auch eine Wasserzuführung vorgesehen sein, die nach dem Einwerfen des Beschwerungsgutes Wasser in die Einwurftaschen 10 einbringt, so daß das Beschwerungsgut in die unteren Taschen 9 gespült wird. Stattdessen ist es aber auch möglich, auf eine derartige Wassereinbringung zu verzichten, da spätestens durch den nächsten Regen das Beschwerungsgut in die unteren Taschen 9 gespült wird. Die Öffnungen 15 sorgen in diesem Falle dafür, daß das Wasser aus den unteren Taschen 9 herausfließen kann und sich diese Taschen 9 nicht nur mit Wasser füllen. Dabei versteht es sich, daß die Öffnungen 15 lediglich eine geringe Öffnungsweite aufweisen.

## Patentansprüche

1. Abdeckung (1) für einen Spargeldamm (2), wobei die Abdeckung (1) eine langgestreckte Folienbahn aufweist, deren beide Längsränder (3) jeweils auf sich selbst umgefaltet sind, wobei der umgefaltete Teil (4) der Folienbahn mit dem nicht umgefalteten Teil (5) der Folienbahn durch Querverbindungen (6) und Längsverbindungen (7) verbunden ist und wobei durch die Querverbindungen (6) und die Längsverbindungen (7) eine Vielzahl von in Längsrichtung (L) hintereinander in Reihe angeordneten, jeweils wenigstens eine Öffnung (8) aufweisenden Taschen (9) zur Aufnahme von Beschwerungsgut gebildet sind, **dadurch gekennzeichnet, daß** im Bereich der umgefalteten Längsränder (3) der Reihe von Taschen (9) quer zur Längsrichtung (L) wenigstens eine Reihe mit einer Vielzahl von in Längsrichtung (L) hintereinander angeordneten Einwurftaschen (10) vorgesetzt ist, daß jede Einwurftasche (10) zwischen benachbarten Querverbindungen (6, 6') vorgesehen ist und wenigstens eine Einwurföffnung (11) aufweist, daß die Einwurftaschen (10) über die Öffnungen (8) in die Taschen (9) münden und daß die Einwurföffnung (11) eine Öffnungsweite von mindestens 80 % des Abstands benachbarter Querverbindungen (6, 6') aufweisen.

2. Abdeckung nach Anspruch 1, **dadurch gekennzeichnet, daß** oberhalb der Querverbindungen (6, 6') keine Längsverbindungen oder nur Längsverbindungsabschnitte (6a) geringer Länge vorgesehen sind und/oder daß die Querverbindungen (6, 6') unterbrochen sind und/oder daß oberhalb der Querverbindungen (6, 6') wenigstens eine punktförmige Verbindung (6b) vorgesehen ist und/oder daß die Querverbindungen (6, 6') eine größere Breite als die Längsverbindungen (7) aufweisen und/oder daß die Querverbindungen (6, 6') durch eine Mehrzahl von nebeneinander angeordneten, querverlaufenden Verbindungen gebildet sind.

3. Abdeckung nach Anspruch 1 oder 2, **dadurch gekennzeichnet, daß** die Öffnungsweite der Einwurföffnung (11) größer ist als die Öffnungsweite der Öffnung (8).

4. Abdeckung nach einem der vorhergehenden Ansprüche, **dadurch gekennzeichnet, daß** die Öffnung (8) mittig zwischen den Querverbindungen (6) vorgesehen ist.

5. Abdeckung nach einem der vorhergehenden Ansprüche, **dadurch gekennzeichnet, daß** die Öffnung (8) zwischen zwei Längsverbindungen (7) gebildet ist.

6. Abdeckung nach einem der vorhergehenden Ansprüche, **dadurch gekennzeichnet, daß** die Grundfläche der Tasche (9) dem 0,5- bis 2-fachen der Grundfläche der Einwurftasche (10) entspricht.

7. Abdeckung nach einem der vorhergehenden Ansprüche, **dadurch gekennzeichnet, daß** die Querverbindungen (6) der Einwurftaschen (10) nicht bis zum äußeren freien Folienrand (12) des umgefalteten Teils (4) reichen, so daß sich ein in Längsrichtung (L) verlaufender freier Randbereich (13) oberhalb der Querverbindungen (6) ergibt.

8. Abdeckung nach einem der vorhergehenden Ansprüche, **dadurch gekennzeichnet, daß** die Querverbindungen (6, 6') nicht bis zum Umfaltrand (14) reichen und/oder daß in den Taschen (9) Öffnungen (15) geringer Öffnungsweite zum Entlüften und/oder Entwässern vorgesehen sind.

9. Verfahren zum Befüllen von Taschen einer Abdeckung für einen Spargeldamm mit Beschwerungsgut, wobei die Abdeckung eine langgestreckte Folienbahn aufweist, deren beide Längsränder jeweils auf sich selbst umgefaltet sind, wobei der umgefaltete Teil der Folienbahn mit dem nicht umgefalteten Teil der Folienbahn durch Querverbindungen und Längsverbindungen verbunden ist und wobei durch die Querverbindungen und eine Längsverbindungen eine Vielzahl von in Längsrichtung hintereinander in Reihe angeordneten jeweils wenigstens eine Öffnung aufweisenden Taschen zur Aufnahme von Beschwerungsgut gebildet werden, wobei zum Befüllen die Abdeckung auf der Krone des Spargeldamms aufliegt und die Taschen sich an den unteren Bereichen der Seitenflächen des Spargeldamms befinden, **dadurch gekennzeichnet, daß** mittels einer entlang des Spargeldamms verfahrbaren Einrichtung automatisch Beschwerungsgut gegen die Abdeckung im Bereich der Seitenflächen derart geworfen wird, daß das Beschwerungsgut anschließend in die Taschen gelangt, wobei der Reihe von Taschen quer zur Längsrichtung wenigstens eine Reihe mit einer Vielzahl von Einwurftaschen vorgesetzt ist, wobei jede Einwurftasche zwischen benachbarten Querverbindungen vorgesehen ist, wobei die Einwurftaschen über die Öffnungen in die Taschen münden und wobei das Beschwerungsgut über die Einwurftaschen in die Taschen gelangt

10. Verfahren nach Anspruch 9, **dadurch gekennzeichnet, daß** das Aufwerfen von Beschwerungsgut mittels eines Schars erfolgt.

11. Verfahren nach einem der Ansprüche 9 oder 10, **dadurch gekennzeichnet, daß** die Einwurftaschen vor dem Aufwerfen von Beschwerungsgut automatisch geöffnet werden.

12. Verfahren nach einem der Ansprüche 9 bis 11, **dadurch gekennzeichnet, daß** das in die Einwurftaschen eingebrachte Beschwerungsgut durch Wasser in die Taschen eingespült wird.

## Claims

1. A cover (1) for an asparagus bed (2), wherein said cover (1) has an elongated foil sheet with each of both longitudinal edges (3) folded on themselves wherein the folded section (4) of said foil sheet is joined with said unfolded section (5) by means of transverse joints (6) and longitudinal joints (7) and wherein said transverse joints (6) and said longitudinal joints (7) have formed in longitudinal direction 0(L) a plurality of pockets (9), repeated continuously in a row along its length, having at least one opening (8) used for insertion of weight material, **characterized in that** in the area of said folded longitudinal edges (3), said row of pockets (9) is lead transverse to longitudinal direction (L) by at least one row with a plurality of filling pockets (10), repeated continuously in longitudinal direction (L), that each filling pocket (10) is arranged between adjacent transverse joints (6, 6') and has at least one filling opening (11), that said filling pockets (10) join the pockets (9) through openings (8), and that filling opening (11) has an opening width of at least 80 % of the distance of adjacent transverse joints (6, 6').

2. The cover according to claim 1, **characterized in that** above said transverse joints (6, 6') no longitudinal joints or only longitudinal joint sections (6a) of short length are provided and/or that said transverse joints (6,6') are discontinuous and/or that above said transverse joints (6, 6') at least one punctual joint (6b) is provided and/or that said transverse joints (6, 6') have a longer width than said longitudinal joints (7) and/or that said transverse joints (6, 6') are composed of a plurality of juxtaposed transverse joints.

3. The cover according to claim 1 or claim 2, **characterized in that** said opening width of said filling opening (11) is wider than said opening width of opening (8).

4. The cover according to any of the preceding claims, **characterized in that** opening (8) is provided centered between said transverse joints (6).

5. The cover according to any of the preceding claims, **characterized in that** said opening (8) is formed between two longitudinal joints (7).

6. The cover according to any of the preceding claims, **characterized in that** the footprint of said pocket (9) corresponds to 0.5times to 2times of the footprint of said filling pocket (10).

7. The cover according to any of the preceding claims, **characterized in that** said transverse joints (6) of said filling pockets (10) do not reach to the most outer unattached foil edge (12) of said folded section (4), so that an unattached border area (13) in longitudinal direction (L) is formed above said transverse joints (6).

8. The cover according to any of the preceding claims, **characterized in that** said transverse joints (6, 6') do not reach to said folded edge (14) and/or that in said pockets (9) passages (15) of small width are provided for ventilation and/or drainage.

9. The method for filling said pockets of a cover for an asparagus bed with weight material, wherein said cover has an elongated foil sheet with each of both longitudinal edges folded on themselves, wherein said folded section of said foil sheet is joined with said unfolded section of said foil sheet through transverse joints and longitudinal joints and wherein through transverse joints and longitudinal joints a plurality of in longitudinal direction in a continuously repeated row of pockets, each with at least one opening for insertion of weight material, wherein at filling the cover sits on the crown of the asparagus bed and said pockets are located at the lower border of the side faces of said asparagus bed, **characterized in that** by means of a moveable device along the asparagus bed, weight material is automatically accumulated against said cover in the area of the side faces in such a manner that subsequently said weight material moves into said pockets, wherein said row of pockets is lead transverse to said longitudinal direction by at least one row with a plurality of filling pockets, wherein each filling pocket is arranged between adjacent transverse joints, wherein said filling pockets join said pockets through said openings, and wherein weight material moves through said filling pockets into said pockets.

10. The method according to claim 9, **characterized in that** the accumulation of weight material to be carried out by means of a ploughshare.

11. The method according to claim 9 or claim 10,
**characterized in that** said filling pockets are opened automatically before accumulation of the weight material.

12. The method according to claims 9 to 11, **characterized in that** the weight material inserted in said filling pockets is flushed into said pockets by water.

## Revendications

1. Elément de recouvrement (1) pour une butte d'asperges (2), l'élément de recouvrement (1) comportant une bande de feuille mince oblongue, dont chacun des deux bords longitudinaux (3) est replié sur lui-même, la partie repliée (4) de la bande de film étant reliée avec la partie non repliée (5) de la bande de film par des liaisons transversales (6) et par des liaisons longitudinales (7) et les liaisons transversales (6) et les liaisons longitudinales (7) formant une pluralité de poches (9) disposées en rangées les unes derrière les autres en direction longitudinale (L), comportant chacune au moins un orifice (8) pour recevoir des produits de lestage, **caractérisé en ce que** dans la zone des bords longitudinaux (3) repliés de la rangée de poches (9), à la transversale de la direction longitudinale (L), au moins une rangée avec une pluralité de poches d'introduction (10) disposées les unes derrière les autres en direction longitudinale (L) est préconformée à la rangée de poches (9), **en ce que** chaque poche d'introduction (10) est prévue entre des liaisons transversales (6, 6') voisines et comporte au moins un orifice d'introduction (11), **en ce que** les poches d'introduction (10) débouchent dans les poches (9) par l'intermédiaire des orifices (8) et **en ce que** l'orifice d'introduction (11) a une largeur d'ouverture d'au moins 80 % de la distance entre des liaisons transversales (6, 6') voisines.

2. Elément de recouvrement selon la revendication 1, **caractérisé en ce qu'**au dessus des liaisons transversales (6, 6'), on n'a prévu aucune liaison longitudinale ou uniquement des sections de liaisons longitudinales (6a) de faible longueur et/ou **en ce que** les liaisons longitudinales (6, 6') sont interrompues et/ou **en ce que** au-dessus des liaisons longitudinales (6, 6') est prévue au moins une liaison ponctuelle (6b) et/ou **en ce que** les liaisons transversales (6, 6') ont une plus grande largeur que les liaisons longitudinales (7) et/ou **en ce que** les liaisons transversales (6, 6') sont formées par une pluralité de liaisons s'étendant à la transversale, disposées côte à côte.

3. Elément de recouvrement selon la revendication 1 ou 2, **caractérisée en ce que** la largeur d'ouverture de l'orifice d'introduction (11) est supérieure à la largeur d'ouverture de l'orifice (8).

4. Elément de recouvrement selon l'une quelconque des revendications précédentes, **caractérisé en ce que** l'orifice (8) est prévu au centre entre les liaisons transversales (6).

5. Elément de recouvrement selon l'une quelconque des revendications précédentes, **caractérisé en ce que** l'orifice (8) est prévu entre deux liaisons transversales (7).

6. Elément de recouvrement selon l'une quelconque des revendications précédentes, **caractérisé en ce que** la surface de base de la poche (9) correspond à de 0,5 à 2 fois la surface de base de la poche d'introduction (10).

7. Elément de recouvrement selon l'une quelconque des revendications précédentes, **caractérisé en ce que** les liaisons transversales (6) des poches d'introduction (10) ne vont pas jusqu'au bord libre extérieur du film (12) de la partie repliée (4), pour donner naissance à une zone marginale libre (13) s'étendant en direction longitudinale (L) au dessus des liaisons transversales (6).

8. Elément de recouvrement selon l'une quelconque des revendications précédentes, **caractérisé en ce que** les liaisons transversales (6, 6') ne vont pas jusqu'au bord replié (14) et/ou **en ce que** dans les poches (9) sont prévues des orifices (15) de plus faible largeur d'ouverture, pour ventiler et/ou pour drainer.

9. Procédé de remplissage de poches d'un élément de recouvrement pour une butte d'asperges avec des produits de lestage, l'élément de recouvrement comportant une bande de film oblongue, dont chacun des deux bords longitudinaux est replié sur lui-même, la partie repliée de la bande de film étant reliée avec la partie non repliée de la bande de film par des liaisons transversales et des liaisons longitudinales et les liaisons transversales et une liaison longitudinale formant une pluralité de poches disposées en rangées les unes derrière les autres, comportant une ouverture pour recevoir des produits de lestage, alors que pour le remplissage, l'élément de recouvrement est couché sur la crête de la butte d'asperges, **caractérisé en ce qu'**au moyen d'un dispositif déplaçable le long de la butte d'asperges, des produits de lestage sont jetés automatiquement contre l'élément de recouvrement, dans la zone des surfaces latérales, de sorte que les produits de lestage arrivent ensuite dans les poches, au moins une rangée avec une pluralité de poches d'introduction étant préconformée à la rangée de poches, à la transversale de la direction longitudinale, chaque poche d'introduction étant prévue entre des liaisons transversales voisines, les poches d'introduction débouchant dans les poches par l'intermédiaire des ouvertures et les produits de lestage arrivant dans les poches par l'intermédiaire des poches d'introduction.

10. Procédé selon la revendication 9, **caractérisé en ce que** le jet de produits de lestage est effectué au moyen d'un soc.

11. Procédé selon l'une quelconque des revendications 9 ou 10, **caractérisé en ce que** les poches d'introduction sont automatiquement ouvertes avant le jet de produits de lestage.

12. Procédé selon l'une quelconque des revendications 9 à 11, **caractérisé en ce que** les produits de lestage introduits dans les poches d'introduction sont remblayés dans les poches par de l'eau.
